# EUROPEAN PATENT APPLICATION

(11) **EP 2 502 801 A1**
(43) Date of publication of application: **26.09.2012**
(21) Application number: 10851556.0
(22) Date of filing: 05.08.2010
(51) Int. Cl.: B62B 7/06

(54) **BABY CARRIAGE FOLDED BY ONE HAND**

(30) Priority: 20.05.2010 CN 201020200839 U
(71) Applicant: Sunnylove Baby Products Zhuhai Co., Ltd, Zhuhai, Guangdong 519090 (CN)
(72) Inventor: LIU, Xiuping, Zhuhai, Guangdong 519015 (CN)
(74) Representative: Patentanwälte Westphal, Mussgnug & Partner
(86) International application number: PCT/CN2010/001191
(87) International publication number: WO 2011/143797

(57) **Abstract**

A baby carriage folded by one hand includes a front foot tube (1), a handle tube (3), a back foot tube (2) and a joint assembly (4). The joint assembly interlinks the front foot tube, the back foot tube and the handle tube, wherein, the joint assembly is fixedly connected to the back foot tube. The joint assembly includes an upper joint (43), a lower joint (44) and a release assembly, wherein, the upper joint and the handle tube are riveted, the lower joint and the front foot tube are riveted, and the upper joint and the lower joint include intermeshing gears. The release assembly includes a bayonet lock (451), a slide sleeve (452), a spring (453), and a folding operation element. The slide sleeve is movably set in the back foot tube, and the spring is set in the slide sleeve. The bayonet lock for limiting the interaction of the upper and lower joints is fixedly set on one end of the slide sleeve, and the foling operation element is connected to the other end of the slide sleeve. The folding operation element is across the seat of the baby carriage. The folding of baby carriage is convinient and laborsaving. (Fig. 3)

## Description

### Technical Field

The invention relates to a baby carriage foldable by one hand.

### Background

In some known baby carriages foldable by one hand, the folding of the carriage is performed by actuating the folding joints through the operation of the folding controller provided on the handle tube. In these carriages, in order to achieve the one-hand folding, various proposals have been offered for the structure of the folding controller and the cooperation thereof with the foling joints.

### Summary

An object of the invention is to provide a baby carriage foldable by one hand, which is operated conviniently, is simple in the structure, and is flexible in the folding operation and the configuration. According to the invention, a baby carriage is provided, wherein the baby carriage comprises a front leg tube, a handle tube, a rear leg tube and a joint assembly interconnecting the front leg tube, the handle tube and the rear leg tube, and wherein the joint assembly is fixed on the rear leg tube, characterized in that the joint assembly comprises: an upper joint integrally riveted to the handle tube, a lower joint integrally riveted to the front leg tube, wherein the upper and lower joints comprise gears engaging with each other, and a releasing assembly comprising a pin, a sliding sleeve movably provided inside the rear leg tube, a spring provided inside the sliding sleeve and a folding operation assembly extending across a seat of the baby carriage, wherein the pin to be interacted with the upper and lower joints is fixed on one end of the sliding sleeve, and the folding operation assembly is connected to the other end of the sliding sleeve.

According to the invention, a lower end of the upper joint and a lower end of the lower joint each are provided with a blocking part, and the blocking parts of the upper and lower joints are located opposite to each other in a staggered manner so that a gap for accomodating the pin can be formed, and wherein in an unfolding state of the baby carriage, the blocking parts of the upper and lower joints each engage with one end of the pin, and wherein the baby carriage can be folded when the pin is disengaged from the blocking parts of the upper and lower joints.

According to the invention, the spring urges the pin when the blocking parts of the upper and lower joints engage with the pin, so as to maintain the pin in the engaged position.

According to the invention, the joint assembly further comprises an outer joint cover and an inner joint cover each provided with a corresponding positioning hole, the upper and lower joints each are also provided with a corresponding positioning hole, the joints and the covers are pivotably connected to each other by means of these positioning holes so that the gears of the joints engage with each other.

According to the invention, the rear leg tube is integrally riveted to the outer and inner joint covers by means of corresponding mounting holes.

According to the invention, the joint assembly further comprises a decorative cover for covering the outer joint cover.

According to the invention, the gears are integrally formed on the upper and lower joints.

According to the invention, the folding operation assembly may be a one-piece connecting member. According to an embodiment, the folding operation assembly may consist of a pulling member connected to the other end of the sliding sleeve, a releasing member and an operating member for the releasing member extending across the seat of the baby carriage, the releasing member being connected to the pulling member and the operating member for the releasing member

According to the invention, the baby carriage can be automatically and conviniently folded by simply raising the folding operation assembly upward by one hand and under the weights of the associated parts of the baby carriage or a small external force. The upper and lower joints rotates by means of the engaging gears, such that the baby carriage can be folded flexibly and non-laboriously. The folding joints are simpler in structure and lower in cost.

### Brief Description of the drawings

The invention will be described hereinbelow in detail by way of non-limiting examples and with reference to the drawings, wherein:
Fig. 1 is a side view of the baby carriage;
Fig. 2 is an exploded view of a joint assembly of the baby carriage;
Fig. 3 is an enlarged cross-section view of the joint assembly of the baby carriage in an assembled state;
Fig. 4 is an enlarged view of the joint assembly of the baby carriage in an assembled state, with an outer joint cover being removed;
Fig. 5 is a perspective view of the joint assembly of the baby carriage;
Fig. 6 is a perspective view of a part of the joint assembly of the baby carriage, showing a releasing member and an operating member for the releasing member;
Figs. 7-9 show the process of the folding and unfolding of the baby carriage.

### Preferred Embodiments

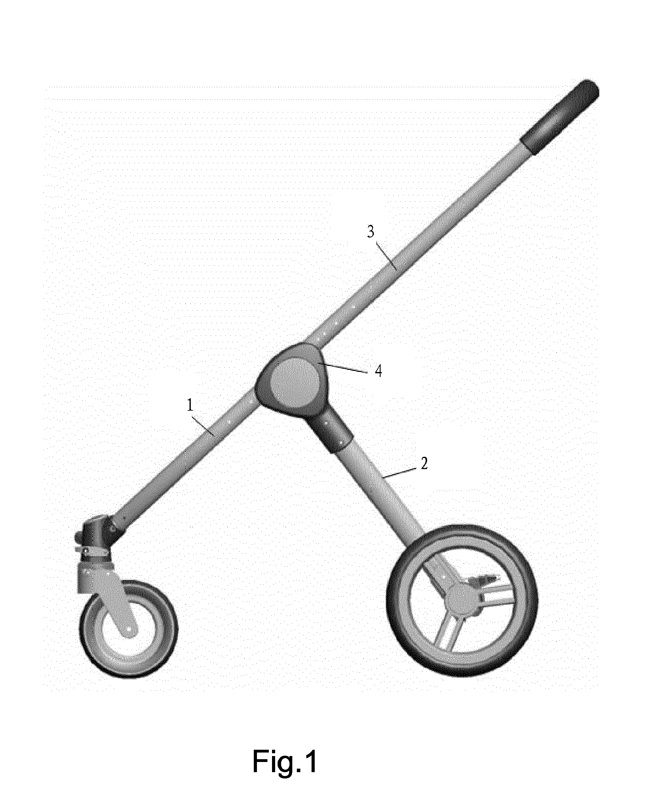

As shown in Fig. 1, a frame of a baby carriage substantially comprises a front leg tube 1, a rear leg tube 2 and a handle tube 3. For sake of simplicity, some parts of the baby carriage are omitted, e.g. a seat assembly, etc. The front leg tube carries a front wheel assembly, the rear leg tube carries a rear wheel assembly, and the handle tube carries a handle. A joint assembly 4 interconnects the front leg tube 1, the rear leg tube 2 and the handle tube 3. The folding and unfolding of the baby carriage is performed through the joint assemblies. Since the joint assemblies at both sides of the baby carriage are symmetrical with respect to each other, only the joint assembly at one side will be described hereinbelow for sake of simplicity.

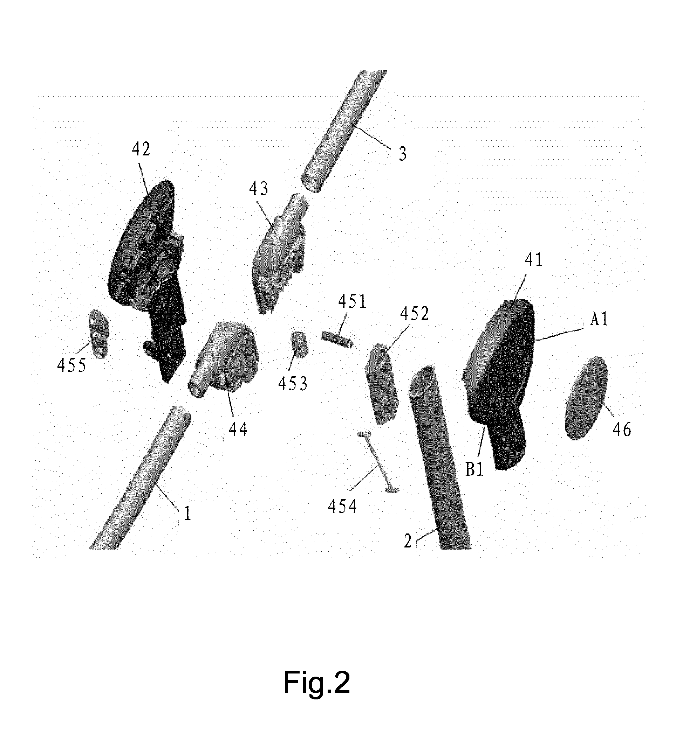

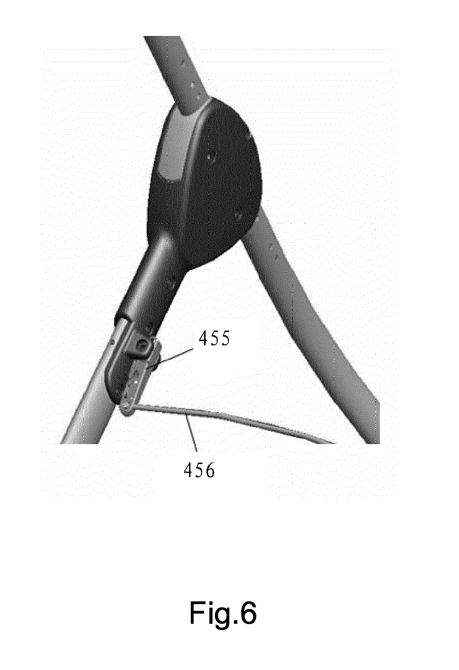

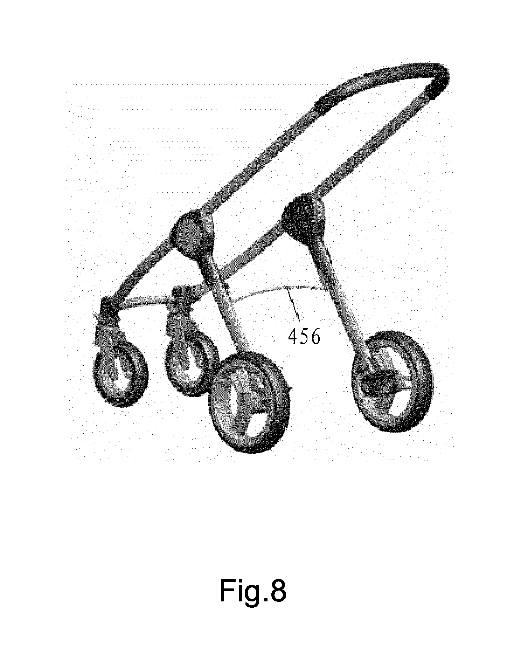

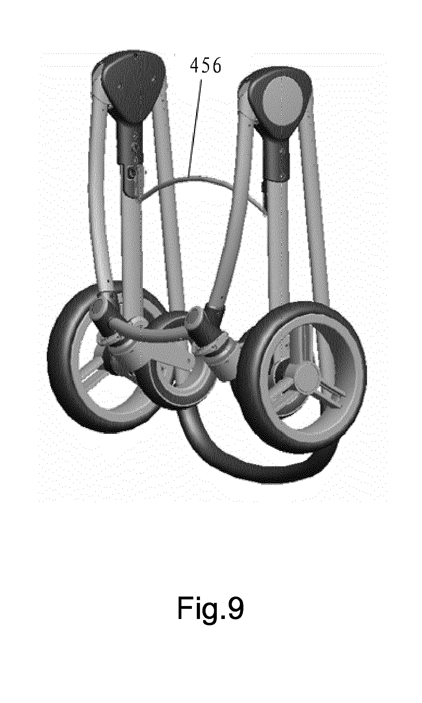

As shown in Fig. 2, the joint assembly 4 comprises an outer joint cover 41, an inner joint cover 42, an upper joint 43, a lower joint 44, a releasing assembly and a decorative cover 46. The releasing assembly comprises a pin 451, a sliding sleeve 452, a spring 453, a pulling member 454, a releasing member 455 and an operating member 456 for the releasing member (only shown in Figs. 6-9). The pulling member 454 includes but is not limited to a steel cord or a link rod.

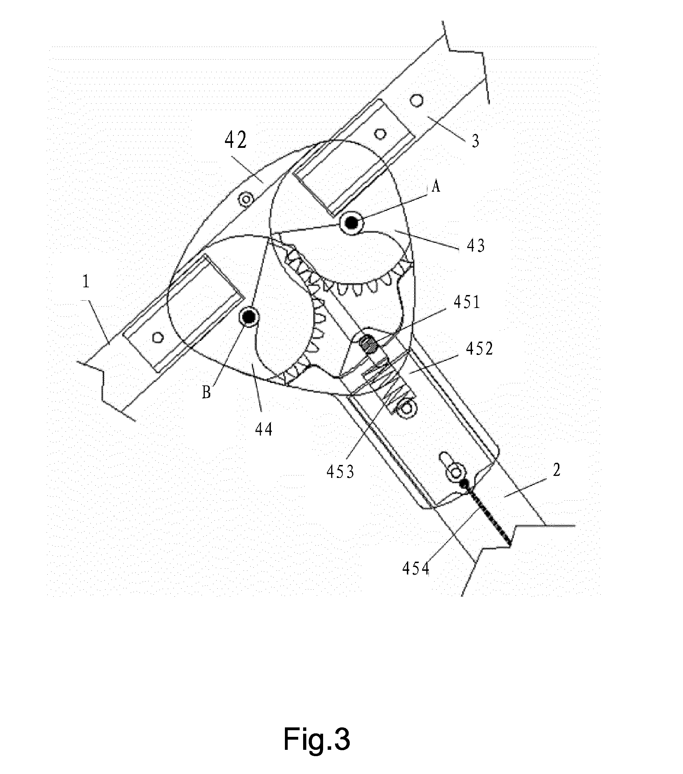

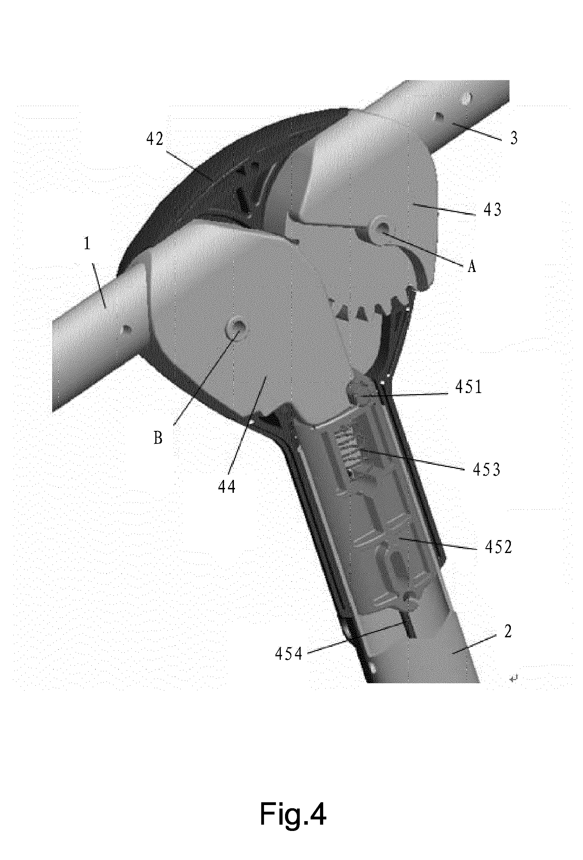

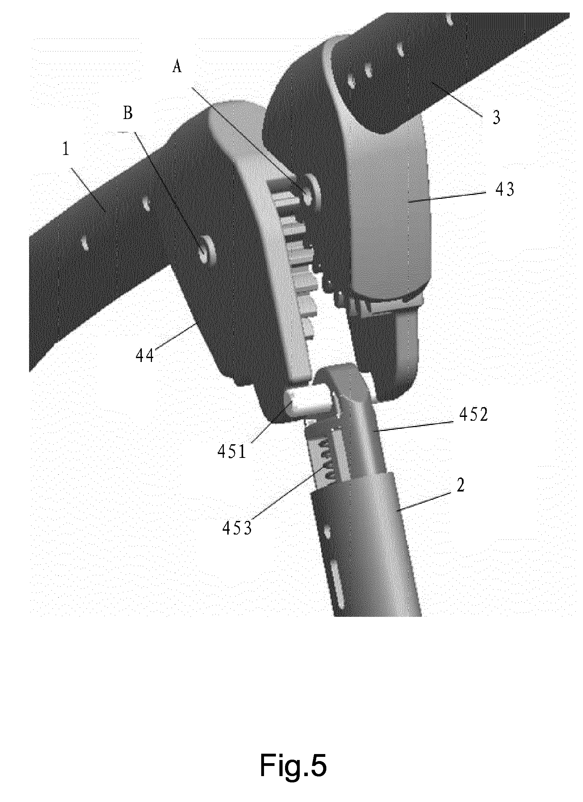

As shown in Figs. 3-5, the upper joint 43 is integrally riveted to the handle tube 3, and the lower joint 44 is integrally riveted to the front leg tube 1. The outer joint cover 41 is provided with a positioning hole A1 and the inner joint cover 42 is provided with a positioning hole B1. Correspondingly, the upper joint 43 and the lower joint 44 are also provided with a positioning hole A and a positioning hole B, respectively. The outer joint cover, the inner joint cover, the upper joint and the lower joint are pivotably connected by means of these positioning holes. The front leg tube and the handle tube may be pivoted by means of the upper and lower joints. The rear leg tube 2 and the joint covers are integrally riveted by means of corresponding mounting holes.

Each of the upper joint 43 and the lower joint 44 comprises a gear, which may be integrally formed on the upper and lower joints respectively. Once the joints and the joint covers have been pivotably connected by means of the corresponding positioning holes, the gears on the upper joint 43 and the lower joints 44 will be engaged with each other.

A lower end of the upper joint and a lower end of the lower joint each are provided with a blocking part or a notch. Once the gears of the upper and lower joints have been engaged with each other after assembled, the blocking parts of the upper and lower joints will be located opposite to each other in a staggered manner so that a gap is formed for accomodating the pin.

The sliding sleeve 452 of the releasing assembly is mounted inside the rear leg tube 2 and is provided with the spring 453 therein. The pin 451 is fixed at one end of the sliding sleeve 452, and the pulling member 454 is connected to the other end of the sliding sleeve 452. The sliding sleeve 452 is movable inside the rear leg tube 2. When the blocking parts of the upper and lower joints engage with the pin 451, the spring 453 urges the pin so as to maintain the pin in the engaged position.

As shown in Fig. 6, the releasing member 455 is mounted on the rear leg tube 2 and adjacent to the joint assembly 4. The releasing member 455 is connected at one end thereof to the pulling member 454 and at the other end thereof to the operating member 456 for the releasing member. The operating member 456 for the releasing member extends across the seat of the baby carriage (not shown). The pulling member 454, the releasing member 455 and the operating member 456 for the releasing member can be relaced with a one-piece folding operation member. In such a case, the folding operation member is directly connected to the sliding sleeves at both sides of the baby carriage.

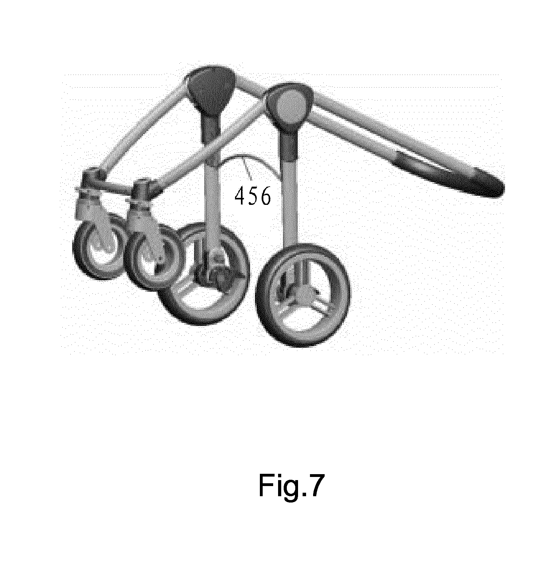

Next, the description will be made to the folding and unfolding operation of the baby carriage with reference to Figs. 7-9. When the handle tube 3 is raised, it pivots about the positioning hole A so as to drive the upper joint 43 and the gear thereof to rotate. Since the gear of the lower joint engages with the gear of the upper joint, the rotation of the gear of the upper joint drives the lower joint 44 and the gear thereof to rotate so as to cause the front leg tube 1 to pivot about the positioning hole B, thereby gradually unfolding the baby carriage. When the blocking parts at the ends of the upper and lower joints stagger so as to form the gap for accomodating the pin, the pin 451 integrally provided on the sliding sleeve 452 is pushed into the gap under the thrust of the spring 453 and engages at both ends thereof with the blocking parts of the upper and lower joints, so as to block the upper and lower joints and thus to achieve a stable unfolding state of the baby carriage.

The operating member 456 for the releasing member is raised upward. As a result, the sliding sleeve 452 is moved inside the rear leg tube 2 by means of the releasing member 455 and the pulling member 454 and the pin 451 is moved out of the gap (blocking parts) at the ends of the upper and lower joints. At this point, the handle tube 3 pivots about the positioning hole A and the front leg tube 1 pivots about the positioning hole B through the engaging gears of the upper and lower joints and under the weights of the handle tube 3, the front leg tube 1 and the accessories thereof (or only a small additional force is required).

Within the scope and the spirit of the invention, various modifications may be appreciated by a person skilled in the art.

## Claims

1. A baby carriage foldable by one hand, wherein the baby carriage comprises a front leg tube, a handle tube, a rear leg tube and a joint assembly interconnecting the front leg tube, the handle tube and the rear leg tube, and wherein the joint assembly is fixed on the rear leg tube, **characterized in that** the joint assembly comprises:
an upper joint integrally riveted to the handle tube,
a lower joint integrally riveted to the front leg tube, wherein the upper and lower joints comprise gears engaging with each other, and
a releasing assembly comprising a pin, a sliding sleeve movably provided inside the rear leg tube, a spring provided inside the sliding sleeve and a folding operation assembly extending across a seat of the baby carriage, wherein the pin to be interacted with the upper and lower joints is fixed on one end of the sliding sleeve, and the folding operation assembly is connected to the other end of the sliding sleeve.

2. The baby carriage according to claim 1, wherein a lower end of the upper joint and a lower end of the lower joint each are provided with a blocking part, and the blocking parts of the upper and lower joints are located opposite to each other in a staggered manner so that a gap for accomodating the pin can be formed, and wherein in an unfolding state of the baby carriage, the blocking parts of the upper and lower joints each engage with one end of the pin, and wherein the baby carriage can be folded when the pin is disengaged from the blocking parts of the upper and lower joints.

3. The baby carriage according to claim 2, wherein the spring urges the pin when the blocking parts of the upper and lower joints engage with the pin, so as to maintain the pin in the engaged position.

4. The baby carriage according to claim 1, wherein the joint assembly further comprises an outer joint cover and an inner joint cover each provided with a corresponding positioning hole, the upper and lower joints each are also provided with a corresponding positioning hole, the joints and the covers are pivotably connected to each other by means of these positioning holes so that the gears of the joints engage with each other.

5. The baby carriage according to claim 4, wherein the rear leg tube is integrally riveted to the outer and inner joint covers by means of corresponding mounting holes.

6. The baby carriage according to claim 4 or 5, wherein the joint assembly further comprises a decorative cover for covering the outer joint cover.

7. The baby carriage according to claim 1, wherein the gears are integrally formed on the upper and lower joints.

8. The baby carriage according to claim 1, wherein the folding operation assembly is a one-piece connecting member.

9. The baby carriage according to claim 1, wherein the folding operation assembly consists of a pulling member connected to the other end of the sliding sleeve, a releasing member and an operating member for the releasing member extending across the seat of the baby carriage, the releasing member being connected to the pulling member and the operating member for the releasing member.
